# EUROPÄISCHE PATENTSCHRIFT

(11) **EP 3 907 107 B1**
(45) Veröffentlichungstag und Bekanntmachung des Hinweises auf die Patenterteilung: **20.09.2023**
(21) Anmeldenummer: 21170427.5
(22) Anmeldetag: 26.04.2021
(51) Int. Cl.: B60Q 1/24, B60Q 1/32, F21S 41/143, F21S 41/151, F21S 41/265, F21S 41/20, F21S 41/32, F21S 41/40, F21S 41/43

(54) **PROJEKTIONSSYSTEM FÜR EIN FAHRZEUG UND FAHRZEUG MIT PROJEKTIONSSYSTEM**
PROJECTION SYSTEM FOR A VEHICLE AND VEHICLE WITH A PROJECTION SYSTEM
SYSTÈME DE PROJECTION POUR UN VÉHICULE ET VÉHICULE POURVU DE SYSTÈME DE PROJECTION

(30) Priorität: 06.05.2020 DE 102020112316
(43) Veröffentlichungstag der Anmeldung: 10.11.2021
(73) Patentinhaber: SUSS MicroOptics SA, 2068 Hauterive (CH)
(72) Erfinder: BREMER, Christopher, 2068 Hauterive (CH); QUARANTA, Giorgio, 2068 Hauterive (CH); NOELL, Wilfried, 2068 Hauterive (CH); SCHARF, Toralf, 2068 Hauterive (CH)
(74) Vertreter: Prinz & Partner mbB

(56) Entgegenhaltungen:
- EP-A1- 3 159 597
- EP-A1- 3 312 501
- EP-A1- 3 404 313
- EP-A1- 3 540 294
- WO-A1-2015/058227
- CN-U- 209 167 790
- DE-A1-102016 204 344
- DE-A1-102018 202 144
- US-A1- 2020 088 374
- US-B1- 10 232 763

## Beschreibung

Die Erfindung betrifft ein Projektionssystem für ein Fahrzeug, insbesondere für eine Umfeldbeleuchtungseinrichtung zur Erzeugung mehrerer Lichtkegel zur Beleuchtung des Bodens in der Umgebung des Fahrzeugs, mit einer Lichtquelle und einem Mikrolinsenarray. Des Weiteren betrifft die Erfindung ein Fahrzeug mit einem derartigen Projektionssystem.

Projektionssysteme für Fahrzeuge sind bekannt.

Diese Projektionssysteme werden üblicherweise dafür verwendet, einen Bereich des Bodens in der Umgebung des Fahrzeugs zu beleuchten, um einer in das Fahrzeug einsteigenden oder aus dem Fahrzeug austeigenden Person eine Orientierungshilfe bereitzustellen sowie die Bodenbeschaffenheit besser sichtbar zu machen, insbesondere bei Dunkelheit oder bei schlechten Witterungsverhältnissen, wodurch die Sicherheit verbessert wird.

Projektionssysteme mit einem Mikrolinsenarray haben den Vorteil, dass sie sehr kompakt gestaltet und damit in Bereichen eingesetzt werden können, in denen nur ein geringer Bauraum zur Verfügung steht, beispielsweise im Türgriff eines Fahrzeugs. Nachteilig bei dieser Art von Projektionssystemen ist jedoch, dass der erzeugte Lichtkegel auf einen engen Winkelbereich, üblicherweise etwa 20°, begrenzt ist, so dass nur ein stark begrenzter Bereich in der Umgebung des Fahrzeugs als Projektionsfläche genutzt werden kann.

Die DE 10 2016 204 344 A1 zeigt einen Scheinwerfer für ein Kraftfahrzeug, insbesondere einen Frontscheinwerfer, umfassend ein Projektionssystem mit einer Lichtquelle und einem Mikrolinsenarray, das ein Feldlinsenarray mit mehreren Feldlinsen, ein Projektionslinsenarray mit mehreren Projektionslinsen sowie eine zwischen dem Feldlinsenarray und dem Projektionslinsenarray angeordnete Maskenschicht hat. Hierbei ist jeder Projektionslinse ein Segment der Maskenschicht zugeordnet ist, so dass bei Beleuchtung des Arrays mit der Lichtquelle zumindest ein Teil der Segmente durch die zugeordneten Projektionslinsen vor den Scheinwerfer projiziert wird, um eine Lichtverteilung zu erzeugen.

Aus der US 10 232 763 B1 ist ein Lichtmodul bekannt, das eine LED-Anordnung, eine Kollimationsoptik sowie eine Beleuchtungs- und Projektions-Mikrolinsenanordnungen aufweist. Das Lichtmodul ist so konfiguriert, dass die Verteilung der Beleuchtungsintensität durch selektives Aktivieren bzw. Deaktivieren von Untergruppen der LED-Anordnung angepasst werden kann.

In der US 2020/088374 A1, der EP 3 159 597 A1 und der WO 2015/058227 A1 sind jeweils Scheinwerfer für Kraftfahrzeug gezeigt.

Die EP 3 312 501 A1 zeigt eine Beleuchtungsvorrichtung für Fahrzeuge mit einer Lichtquelle und einer Optikeinheit zur Erzeugung einer vorgegebenen Lichtverteilung. Die Optikeinheit weist ein Mikrooptikfeld mit einer Mehrzahl von Mikrooptikelementen und ein Mikroblendenfeld mit einer Mehrzahl von Mikroblendenelementen auf.

Aus der CN 209167790 U ist eine optische Anordnung bekannt, die ein Lichtwegablenkungsteil umfasst, das eine Lichteinfallsseitenoberfläche, eine Reflexionsoberfläche und eine Lichtaustrittsseitenoberfläche hat. Ferner ist ein optisches Projektionsmodul vorgesehen, das die optische Anordnung und eine Sensorvorrichtung umfasst.

Aufgabe der Erfindung ist es, ein Projektionssystem für ein Fahrzeug bereitzustellen, das sowohl kompakt gestaltet ist als auch die Limitierung der Projektionssysteme des Standes der Technik aufhebt und damit flexibler eingesetzt werden kann.

Zur Lösung der Aufgabe ist ein Projektionssystem für ein Fahrzeug, insbesondere für eine Umfeldbeleuchtungseinrichtung zur Erzeugung mehrerer Lichtkegel zur Beleuchtung des Bodens in der Umgebung des Fahrzeugs, mit mindestens einer Lichtquelle und einem Mikrolinsenarray vorgesehen, das ein Feldlinsenarray mit mehreren Feldlinsen, ein Projektionslinsenarray mit mehreren Projektionslinsen sowie eine zwischen dem Feldlinsenarray und dem Projektionslinsenarray angeordnete Maskenschicht mit mehreren Maskenteilen umfasst. Das Mikrolinsenarray weist des Weiteren eine optische Achse, einen ersten Abschnitt mit wenigstens einem ersten Kanal und einen zweiten Abschnitt mit wenigstens einem zweiten Kanal auf. Ferner weist das Projektionssystem eine optische Vorrichtung auf, die dem Mikrolinsenarray nachgeordnet und wenigstens im Bereich des ersten Abschnitts angeordnet ist, d.h., das Mikrolinsenarray ist im Strahlengang zwischen der Lichtquelle und der optischen Vorrichtung angeordnet. Hierbei wird von der Lichtquelle emittiertes Licht, das durch den wenigstens einen ersten Kanal des ersten Abschnitts fällt, durch die optische Vorrichtung um einen ersten Winkel gegenüber der optischen Achse abgelenkt und bildet einen ersten Lichtkegel, während von der Lichtquelle emittiertes Licht, das durch den wenigstens einen zweiten Kanal des zweiten Abschnitts fällt, um einen zweiten Winkel gegenüber der optischen Achse abgelenkt wird, der vom ersten Winkel verschieden ist, und einen zweiten Lichtkegel bildet. Im Sinne der Erfindung können der erste oder der zweite Winkel hierbei 0° betragen. Ferner sind im Sinne der Erfindung zwei Winkel voneinander verschieden, wenn sie sich in ihrem Betrag und/oder ihrer Richtung unterscheiden. Der Abstand zwischen dem Mikrolinsenarray und der optischen Vorrichtung beträgt weniger als 20 mm, so dass sich ein besonders kompaktes System ergibt.

Insbesondere weist das Projektionssystem nur ein Mikrolinsenarray zwischen Lichtquelle und optischer Vorrichtung auf.

Es wurde erkannt, dass mittels der optischen Vorrichtung zumindest einer der beiden Lichtkegel abgelenkt werden kann, um den Winkelbereich zu erweitern, in dem das Projektionssystem Projektionsflächen beleuchten kann. Ferner werden zwei separate Lichtkegel gebildet, die gemeinsam oder getrennt voneinander zum Beleuchten von Flächen bzw. Bereitstellen einer Projektion verwendet werden können. Im Unterschied zu einem Projektionssystem, bei dem die beiden Lichtkegel durch zwei separate, zueinander angewinkelte Mikrolinsenarrays bereitgestellt werden, hat das erfindungsgemäße Projektionssystem den Vorteil, dass es kompakter aufgebaut sein kann, da ein einzelnes Mikrolinsenarray weniger Bauraum erfordert als zwei zueinander angewinkelt angeordnete Mikrolinsenarrays mit vergleichbarer Größe. Ferner kann die Haltevorrichtung für ein einzelnes Mikrolinsenarray weniger komplex gestaltet sein. Des Weiteren kann das Projektionssystem einen einfacheren Aufbau haben, insbesondere wenn eine gemeinsame Platine für mehrere Komponenten verwendet wird. Zudem wird der Montageaufwand verringert. Auf diese Weise wird ein Projektionssystem bereitgestellt, dass für unterschiedliche Anwendungen flexibel einsetzbar ist und ferner einen geringen Bauraumbedarf aufweist.

Hierbei kann der erste Winkel mehr als 0°, insbesondere mindestens 10°, bevorzugt mindestens 15° betragen. Zusätzlich oder alternativ kann der zweite Winkel weniger als 0°, insbesondere weniger als -10°, bevorzugt weniger als -15° betragen. Hierdurch sind der erste und der zweite Lichtkegel räumlich voneinander getrennt, so dass sie separate Projektionsflächen beleuchten können.

Zusätzlich oder alternativ kann die Differenz zwischen dem ersten Winkel und dem zweiten Winkel mindestens 15°, insbesondere mindestens 25° betragen, wodurch die beiden Lichtkegel räumlich besonders weit voneinander getrennt sind.

In einer Ausführungsform weist das Mikrolinsenarray eine Maskenschicht zur Erzeugung eines Motivs auf. Insbesondere können dabei die Maskenschicht im ersten Abschnitt und im zweiten Abschnitt zur Erzeugung unterschiedlicher Motive ausgebildet sein. Somit können Motive projiziert werden, die Informationen an den Betrachter übermitteln oder die Ästhetik der Projektion verbessern können.

Die Maskenschicht kann hierbei jeder Linse des Mikrolinsenarrays ein vollständiges Bild und/oder Teilbild bereitstellen, so dass alle Linsen eines Abschnitts ein Einzelbild erzeugen und sich die entsprechende Projektion aus der Überlagerung dieser Einzelbilder zusammensetzt.

Selbstverständlich kann mehr als eine Maskenschicht vorgesehen sein.

In einer weiteren Ausführungsform weist das Mikrolinsenarray zwischen dem ersten Abschnitt und dem zweiten Abschnitt einen lichtundurchlässigen Abschnitt auf, insbesondere mit wenigstens einer geschlossenen Mikrolinse und/oder einem geschlossenen Kanal. Unter "geschlossen" wird hierbei insbesondere derart lichtundurchlässig verstanden, dass kein definierter Strahlengang in Richtung der optischen Achse vollständig durch das Mikrolinsenarray vorhanden ist, z. B. durch Aufrauhungen, Abdecken oder Schwärzen. Der lichtundurchlässige Abschnitt trennt dabei zuverlässig den ersten Abschnitt vom zweiten Abschnitt, so dass gewährleistet ist, dass kein Licht von einem Abschnitt in den anderen fällt. Hierdurch wird die Qualität der Projektion verbessert, die durch den entsprechenden Abschnitt bereitgestellt wird.

Es kann vorgesehen sein, dass die Lichtquelle eine Emissionseinheit mit einem lichtemittierenden Element und einem kollimierenden Element aufweist. Das lichtemittierende Element ist dabei auf der optischen Achse des kollimierenden Elements oder senkrecht zur optischen Achse des kollimierenden Elements versetzt angeordnet. Über die relative Anordnung von dem lichtemittierenden Element und zum kollimierenden Element kann der Strahlengang des Projektionssystems und die Winkel vergrößert eingestellt werden, dem das Licht folgt, das vom lichtemittierenden Element erzeugt wird.

Gemäß einer Ausführungsform weist die Lichtquelle eine erste Emissionseinheit und eine zweite Emissionseinheit auf. Dem ersten Abschnitt ist dabei die erste Emissionseinheit und dem zweiten Abschnitt die zweite Emissionseinheit zugeordnet. Somit strömt emittiertes Licht der ersten Emissionseinheit durch den ersten Abschnitt und emittiertes Licht der zweiten Emissionseinheit durch den zweiten Abschnitt. Auf diese Weise können der erste und der zweite Lichtkegel separat voneinander bereitgestellt werden, wodurch sich die Flexibilität in der Anwendung des Projektionssystems erhöht.

Gemäß einer weiteren Ausführungsform weist die optische Vorrichtung ein erstes optisches Element, das dem ersten Abschnitt des Mikrolinsenarrays zugeordnet ist, und ein zweites optisches Element auf, das dem zweiten Abschnitt des Mikrolinsenarrays zugeordnet ist, insbesondere wobei das erste optische Element und das zweite optische Element verschiedene Brechungsindizes haben und/oder aus unterschiedlichen Materialien hergestellt sind. Dabei wird von der Lichtquelle emittiertes Licht, das durch den wenigstens einen ersten Kanal des ersten Abschnitts fällt, durch das erste optische Element abgelenkt, während von der Lichtquelle emittierte Licht, das durch den wenigstens einen zweiten Kanal des zweiten Abschnitts fällt, durch das zweite optische Element abgelenkt. Somit kann das Licht der entsprechenden Abschnitte jeweils durch das zugehörige optische Element individuell abgelenkt werden.

Die optischen Elemente der optischen Vorrichtung können zusammen einstückig ausgeführt sein, wodurch die Herstellung des Projektionssystems kostengünstiger gestaltet sein kann.

Ferner kann die optische Vorrichtung in einer Ausführungsform ein oder mehrere optische Elemente aus folgender Gruppe umfassen: ein Prisma, insbesondere ein spritzgegossenes Prisma, eine Linse, ein Linsenarray, eine Freiformoptik, ein Mikrospiegelarray (Digital Micromirror Device - DMD) und/oder eine Flüssigkristallmatrix (LC-Matrix).

In einer weiteren Ausführungsform weist das Projektionssystem eine Verstelleinrichtung für die optische Vorrichtung auf, mittels der zumindest ein optisches Element der optischen Vorrichtung zwischen unterschiedlichen Stellungen verstellbar ist. Über die unterschiedlichen Stellungen kann dabei die Art und Weise verändert werden, wie das Licht durch das entsprechende optische Element abgelenkt wird. Insbesondere kann dadurch der Lichtkegel verstellt werden, der dem optischen Element zugeordnet ist.

Hierbei kann die Verstelleinrichtung einen Antrieb aufweisen, der dazu ausgebildet ist, das zumindest eine optische Element der optischen Vorrichtung um eine Rotationsachse zu rotieren und/oder um eine Schwenkachse zu schwenken.

Insbesondere erstreckt sich dabei die Rotationsachse parallel zur optischen Achse des Mikrolinsenarrays oder die Schwenkachse steht senkrecht zur optischen Achse des Mikrolinsenarrays.

Gemäß einer Ausführungsform beträgt der Abstand zwischen der optischen Vorrichtung und dem Mikrolinsenarray weniger als 10 mm, insbesondere weniger als 5 mm, wodurch das Projektionssystem besonders kompakt gestaltet und gut geschützt in einem Schacht für das Projektionssystem aufgenommen sein kann, beispielsweise in der Karosserie eines Fahrzeugs.

Ferner kann vorgesehen sein, dass das Projektionssystem einen Zustand aufweist, in der der erste Lichtkegel und der zweite Lichtkegel nicht miteinander, teilweise miteinander oder vollständig miteinander überlappen. Somit können die beiden Lichtkegel separat voneinander eingesetzt werden, um jeweils eine Projektion zu erzeugen, oder zusammen kombiniert, um eine gemeinsame Projektion jeweils zumindest abschnittsweise zu bilden.

Gemäß einer Ausführungsform weist das Projektionssystem einen Zustand auf, in der der erste Lichtkegel und der zweite Lichtkegel teilweise derart überlappen, dass die Leuchtdichte in einer Ebene, insbesondere einer Ebene parallel zum Boden, homogen ist. Auf diese Weise kann eine Projektion mit besonders hoher Güte erzeugt werden, insbesondere in einer Richtung in der sich die Projektion vom Projektionssystem weg erstreckt, da mit steigendem Abstand die Beleuchtungsstärke und damit die Leuchtdichte der Projektion abfällt.

Gemäß einer weiteren Ausführungsform weist die optische Vorrichtung eine reflektierende Fläche auf, die Licht reflektiert, das durch den wenigstens einen ersten Kanal des ersten Abschnitts und/oder durch den wenigstens einen zweiten Kanal des zweiten Abschnitts fällt. Mittels Reflexion kann das Licht um einen besonders großen Winkel abgelenkt werden, wodurch das Anwendungsgebiet des Projektionssystems erweitert ist.

Erfindungsgemäß ist zur Lösung der oben genannten Aufgabe auch ein Fahrzeug mit einem erfindungsgemäßen Projektionssystem mit den zuvor genannten Vorteilen vorgesehen.

Weitere Vorteile und Merkmale ergeben sich aus der nachfolgenden Beschreibung sowie aus den beigefügten Zeichnungen. In diesen zeigen:
- Figur 1 in einer schematischen Darstellung ein erfindungsgemäßes Fahrzeug mit einem erfindungsgemäßen Projektionssystem,
- Figur 2 in einer schematischen Darstellung das Projektionssystem aus Figur 1 gemäß einer ersten Ausführungsform,
- Figur 3 in einer schematischen Darstellung das Projektionssystem aus Figur 1 gemäß einer zweiten Ausführungsform,
- Figur 4 in einer schematischen Darstellung das Projektionssystem aus Figur 1 gemäß einer dritten Ausführungsform,
- Figur 5 in einer schematischen Darstellung das Projektionssystem aus Figur 1 gemäß einer vierten Ausführungsform,
- Figur 6 in einer schematischen Darstellung ein Projektionsmodul des Projektionssystems aus Figur 1 gemäß einer fünften Ausführungsform,
- Figur 7 in einer schematischen Darstellung ein Projektionsmodul des Projektionssystems aus Figur 1 gemäß einer sechsten Ausführungsform,
- Figur 8 in einer schematischen Darstellung ein Projektionsmodul des Projektionssystems aus Figur 1 gemäß einer siebten Ausführungsform,
- Figur 9 in einer schematischen Darstellung das Projektionssystem aus Figur 1 gemäß einer achten Ausführungsform,
- Figur 10 in einer schematischen Darstellung eine Projektion des Projektionssystems aus Figur 1 gemäß einer neunten Ausführungsform,
- Figur 11 in einer schematischen Darstellung eine Projektion des Projektionssystems aus Figur 1 gemäß einer zehnten Ausführungsform,
- Figur 12 in einer schematischen Darstellung ein Projektionsmodul des Projektionssystems aus Figur 1 gemäß einer elften Ausführungsform,
- Figur 13 in einer schematischen Darstellung das Projektionssystem aus Figur 1 gemäß einer zwölften Ausführungsform, und
- Figur 14 in einer schematischen Darstellung das Projektionssystem aus Figur 1 gemäß einer dreizehnten Ausführungsform.

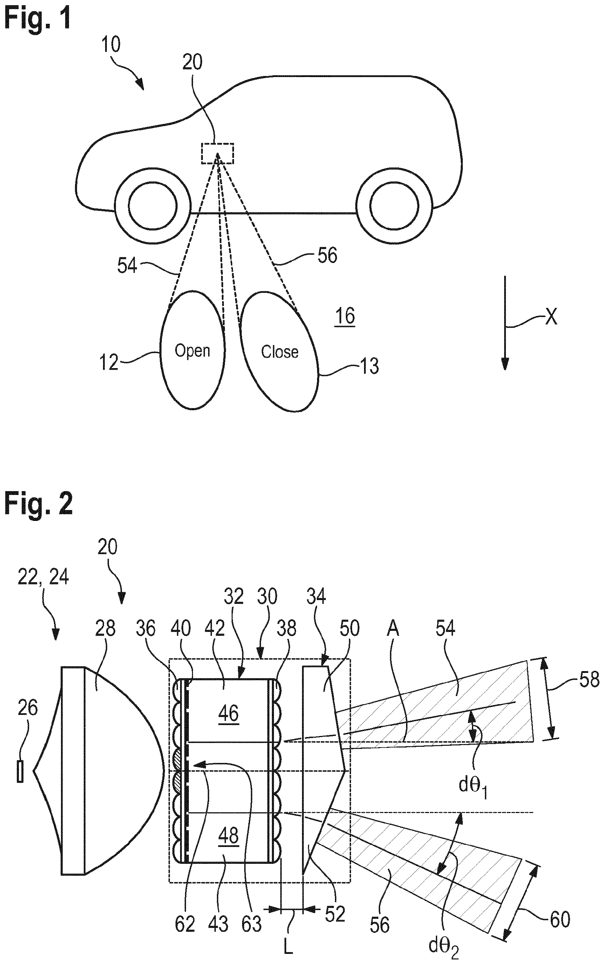

In Figur 1 ist ein Fahrzeug 10 mit einem Projektionssystem 20 gezeigt, mittels dem Projektionen 12, 13 auf Flächen in der Umgebung des Fahrzeugs 10 projiziert werden können.

Das Fahrzeug 10 ist beispielsweise ein PKW. Das Projektionssystem 20 ist unterhalb der Fahrertür des Fahrzeugs 10 angeordnet und Teil einer Umfeldbeleuchtungseinrichtung des Fahrzeugs 10, die dazu vorgesehen ist, Projektionen 12, 13 in X-Richtung vom Fahrzeug 10 weg auf den Boden 16 neben der Fahrerseite zu werfen.

Grundsätzlich kann das Fahrzeug 10 ein beliebiges Fahrzeug und das Projektionssystem 20 an einer beliebigen Stelle am Fahrzeug 10 angeordnet sein.

Das Projektionssystem 20 (siehe Figur 2) hat eine Lichtquelle 22 und ein Projektionsmodul 30, das im Strahlengang der Lichtquelle 22 angeordnet ist.

Die Lichtquelle 22 umfasst eine Emissionseinheit 24 mit einem lichtemittierenden Element 26 und einem kollimierenden Element 28.

Das lichtemittierende Element 26 ist beispielsweise eine LED oder ein Quantenpunkt.

Das kollimierende Element 28 ist beispielsweise ein Kollimator.

Das Projektionsmodul 30 hat ein Mikrolinsenarray 32 mit einer optische Achse A sowie eine optische Vorrichtung 34, die im Strahlengang hinter dem Mikrolinsenarray 32 angeordnet ist.

Der Abstand zwischen der optischen Vorrichtung 34 und dem Mikrolinsenarray 32 beträgt weniger als 20 mm, so dass sich ein besonders kompaktes System ergibt.

Das Mikrolinsenarray 32 umfasst ein Feldlinsenarray 36 mit mehreren Feldlinsen, ein Projektionslinsenarray 38 mit mehreren Projektionslinsen sowie eine zwischen dem Feldlinsenarray 36 und dem Projektionslinsenarray 38 angeordnete Maskenschicht 40 mit mehreren Maskenteilen.

Denkbar ist auch, dass mehrere Maskenschichten 40 vorgesehen sind bzw. die Maskenschicht 40 verschiedene Unterschichten aufweist.

Dabei ist jeder Feldlinse eine Projektionslinse und ein dazwischenliegendes Maskenteil zugeordnet, die gemeinsam einen Kanal 42, 43 des Mikrolinsenarrays 32 bilden. Somit weist das Mikrolinsenarray 32 mehrere Kanäle 42, 43 auf.

Das Mikrolinsenarray 32 ist in einen ersten Abschnitt 46 und einen zweiten Abschnitt 48 unterteilt, wobei sich die Teilung in Richtung des Strahlengangs im Mikrolinsenarray 32 erstreckt.

In der vorliegenden Ausführungsform umfasst jeder Abschnitt 46, 48 dieselbe Anzahl an Kanälen 42, 43.

Grundsätzlich kann das Mikrolinsenarray 32 eine beliebige Anzahl an Abschnitten 46, 48 mit einer beliebigen Anzahl an Kanälen 42, 43 aufweisen, jedoch mindestens einen Kanal 42, 43 in jedem Abschnitt 46, 48.

Die optische Vorrichtung 34 hat ein erstes optisches Element 50, das dem ersten Abschnitt 46 des Mikrolinsenarrays 32 zugeordnet ist, und ein zweites optisches Element 52, das dem zweiten Abschnitt 48 des Mikrolinsenarrays 32 zugeordnet ist.

Die optische Vorrichtung 34 ist hier ein einstückiges Prisma, wobei jeweils eine Hälfte des Prismas eines der beiden optischen Elemente 50, 52 bildet.

In einer alternativen Ausführungsform kann die optische Vorrichtung 34 zumindest ein Prisma, insbesondere ein spritzgegossenes Prisma, eine Linse, ein Linsenarray, eine Freiformoptik und/oder eine Flüssigkristallmatrix umfassen.

Die optische Vorrichtung 34 ist hierbei unmittelbar hinter dem Mikrolinsenarray 32 angeordnet, d.h. der Abstand L zwischen der optischen Vorrichtung 34 und dem Mikrolinsenarray 32 beträgt weniger als 3 mm.

Alternativ kann die optische Vorrichtung 34 mit geringem Abstand hinter dem Mikrolinsenarray 32 angeordnet sein, d.h. der Abstand L zwischen der optischen Vorrichtung 34 und dem Mikrolinsenarray 32 beträgt weniger als 10 mm, insbesondere weniger als 5 mm.

Im Betrieb erzeugt die Emissionseinheit 24 kollimiertes Licht, das durch die Kanäle 42, 43 auf die optische Vorrichtung 34 fällt, die das Licht ablenkt und einen ersten Lichtkegel 54 und einen separaten zweiten Lichtkegel 56 bildet. Das Licht der Kanäle 42 des ersten Abschnitts 46 fällt dabei auf das erste optische Element 50, von dem das Licht um einen ersten Winkel dθ₁ gegenüber der optischen Achse A abgelenkt wird, und bildet den ersten Lichtkegel 54 mit einem ersten Winkelbereich 58.

Das Licht der Kanäle 43 des zweiten Abschnitts 48 fällt hingegen auf das zweite optische Element 52, von dem das Licht um einen zweiten Winkel dθ₂ gegenüber der optischen Achse A abgelenkt wird, und bildet den zweiten Lichtkegel 56 mit einem zweiten Winkelbereich 60.

Der erste Winkel dθ₁ beträgt hierbei etwa +10°, während der zweite Winkel dθ₂ etwa -25° beträgt. Somit beträgt die Differenz zwischen dem ersten Winkel dθ₁ und dem zweiten Winkel dθ₂ etwa 35°, wodurch der erste und der zweite Lichtkegel 54, 56 zwei deutlich voneinander separierte Winkelbereiche 58, 60 abdecken.

Selbstverständlich können der erste Winkel dθ₁ und der zweite Winkel dθ₂ jeweils beliebig groß sein. Solange die beiden Winkel dθ₁, dθ₂ nicht gleich sind oder deren Differenz nicht 360° beträgt, werden zwei getrennte Lichtkegel 54, 56 mit unterschiedlichen Winkelbereichen 58, 60 erzeugt.

In einer alternativen Ausführungsform kann der erste Winkel dθ₁ mehr als 0°, insbesondere mehr als 10°, bevorzugt mehr als 15° betragen, und/oder der zweite Winkel dθ₂ weniger als 0°, insbesondere weniger als -10°, bevorzugt weniger als -15° betragen.

Zusätzlich oder alternativ kann die Differenz zwischen dem ersten Winkel dθ₁ und dem zweiten Winkel dθ₂ mindestens 15°, insbesondere mindestens 25° betragen.

Wie in Figur 1 dargestellt, werden im vorliegenden Ausführungsbeispiel mittels des ersten Lichtkegels 54 eine erste Projektion 12 mit dem Motiv "Open" und mittels des zweiten Lichtkegels 56 eine zweite Projektion 13 mit dem Motiv "Close" auf dem Boden 16 abgebildet.

Die Maskenteile, die den Kanälen 42 im ersten Abschnitt 46 zugeordnet sind, weisen jeweils das Motiv "Open" auf, während die Maskenteile, die den Kanälen 43 im zweiten Abschnitt 48 zugeordnet sind, jeweils das Motiv "Close" aufweisen. Somit bildet jeder Kanal 42, 43 eines Abschnitts 46, 48 jeweils ein Einzelbild mit zumindest Teilen des entsprechenden Motivs ab. Die Einzelbilder jeweils eines Abschnitts 46, 48 bilden zusammen ein Gesamtbild in Form der Projektionen 12, 13, die hierdurch eine besonders hohe Qualität aufweisen.

Das Projektionssystem 20 kann in einer Ausführungsform Teil eines automatischen Türöffnungs- bzw. Türschließsystems sein, das über das Betreten der Projektionen 12, 13 gesteuert wird.

Durch die große Winkeldifferenz der beiden Lichtkegel 54, 56 werden die Projektionen 12, 13 auch in der Nähe des Fahrzeugs 10 in deutlich getrennten Bereichen des Bodens 16 abgebildet, wodurch das Betreten eines Bereichs zuverlässig erfasst werden kann, selbst dann, wenn das Türöffnungs- bzw. Türschließsystem lediglich eine einfach gestaltete, kostengünstige Bilderfassungsvorrichtung aufweist.

Um zu verhindern, dass sich die Projektionen 12, 13 gegenseitig beeinträchtigen, indem Licht aus dem ersten Abschnitt 46 auf das zweite optische Element 52 fällt oder Licht aus dem zweiten Abschnitt 48 auf das erste optische Element 50 fällt, weist das Mikrolinsenarray 32 ferner eine lichtundurchlässige Trennschicht 62 zwischen dem ersten und dem zweiten Abschnitt 46, 48 auf, die Lichtstreuung von einem Abschnitt 46, 48 in den anderen Abschnitt 46, 48 unterbindet.

Alternativ oder zusätzlich kann zwischen dem ersten und dem zweiten Abschnitt 46, 48 ein lichtundurchlässiger Abschnitt 63 vorgesehen sein, der lichtundurchlässig parallel zur optischen Achse ist, d.h. in dem keine definierte optische Abbildung durch das Mikrolinsenarray 32 möglich ist.

Der lichtundurchlässige Abschnitt 63 wird beispielsweise durch geschlossene Kanäle 42, 43 gebildet (gestrichelt angedeutet), insbesondere durch die an den zweiten Abschnitt 48 angrenzenden Kanäle 42 des ersten Abschnitts 46 und die an den ersten Abschnitt 46 angrenzenden Kanäle 43 des zweiten Abschnitts 48. Hierdurch kann der lichtundurchlässige Abschnitt 63 besonders kostengünstig hergestellt werden.

Die Kanäle 42, 43 können hierbei mittels der Maskenschicht 40 geschlossen werden.

Im Folgenden werden weitere Ausführungsformen des Projektionssystems 20 beschrieben die im Wesentlichen den Projektionssystem 20 der ersten Ausführungsform entsprechen, so dass nur auf die Unterschiede eingegangen wird. Für gleiche Strukturen mit gleichen Funktionen werden dieselben Bezugszeichen verwendet und es wird insoweit auf die vorangegangenen Erläuterungen verwiesen

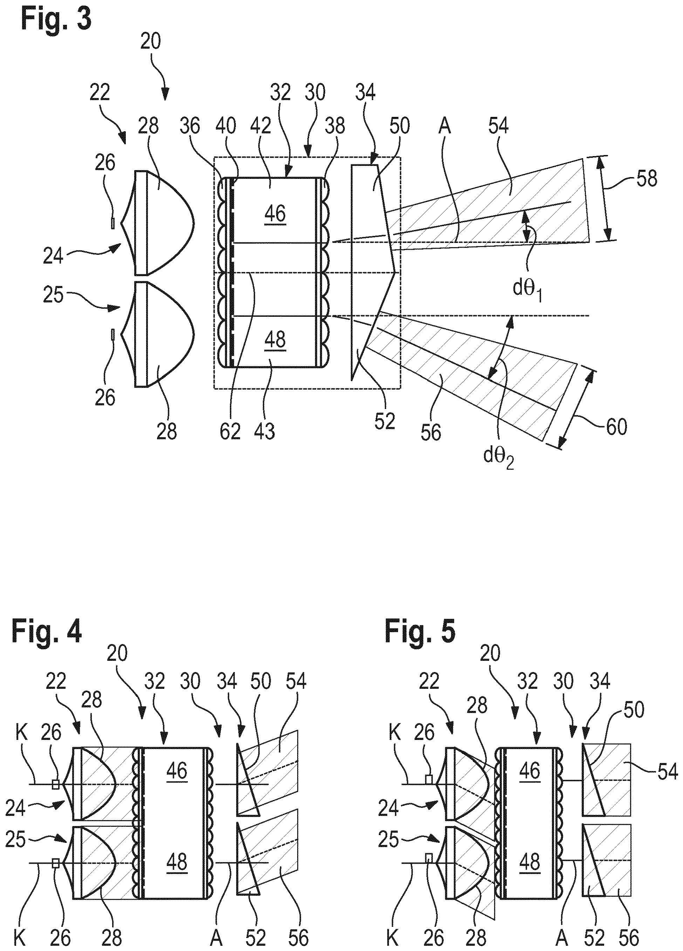

In Figur 3 ist ein Projektionssystem 20 gemäß einer zweiten Ausführungsform gezeigt. Im Unterschied zur ersten Ausführungsform weist das Projektionssystem 20 eine Lichtquelle 22 mit einer zweiten Emissionseinheit 25 auf.

Die erste Emissionseinheit 24 ist dabei dem ersten Abschnitt 46 zugeordnet, so dass das von der ersten Emissionseinheit 24 emittierte Licht, vorzugsweise ausschließlich, durch die Kanäle 42 des ersten Abschnitts 46 fällt, während die zweite Emissionseinheit 25 dem zweiten Abschnitt 48 zugeordnet ist, so dass das von der zweiten Emissionseinheit 25 emittierte Licht, vorzugsweise ausschließlich, durch die Kanäle 43 des zweiten Abschnitts 48 fällt.

Auf diese Weise können die Lichtkegel 54, 56 und damit die Projektionen 12, 13 separat voneinander gesteuert werden, beispielsweise indem die Emissionseinheiten 24, 25 individuell an- und abgeschaltet werden.

In Figur 4 ist ein Projektionssystem 20 gemäß einer dritten Ausführungsform gezeigt. Im Unterschied zur zweiten Ausführungsform hat die optische Vorrichtung 34 zwei optische Elemente 50, 52 in Form von zwei separaten, d.h. nicht direkt miteinander verbundenen, Prismen.

Die lichtemittierenden Elemente 26 sind jeweils koaxial auf der optischen Achse K des ihnen zugeordneten kollimierenden Elements 28 angeordnet.

In Figur 5 ist ein Projektionssystem 20 gemäß einer vierten Ausführungsform gezeigt. Im Unterschied zur dritten Ausführungsform sind die lichtemittierenden Elemente 26 jeweils radial versetzt gegenüber der optischen Achse K des ihnen zugeordneten kollimierenden Elements 28 angeordnet.

Die Anordnung der lichtemittierenden Elemente 26 relativ zu den ihnen zugeordneten kollimierenden Elementen 28 bestimmt den Strahlengang des emittierten Lichts durch das Projektionsmodul 30 und damit den Winkelbereich 58, 60 der Lichtkegel 54, 56.

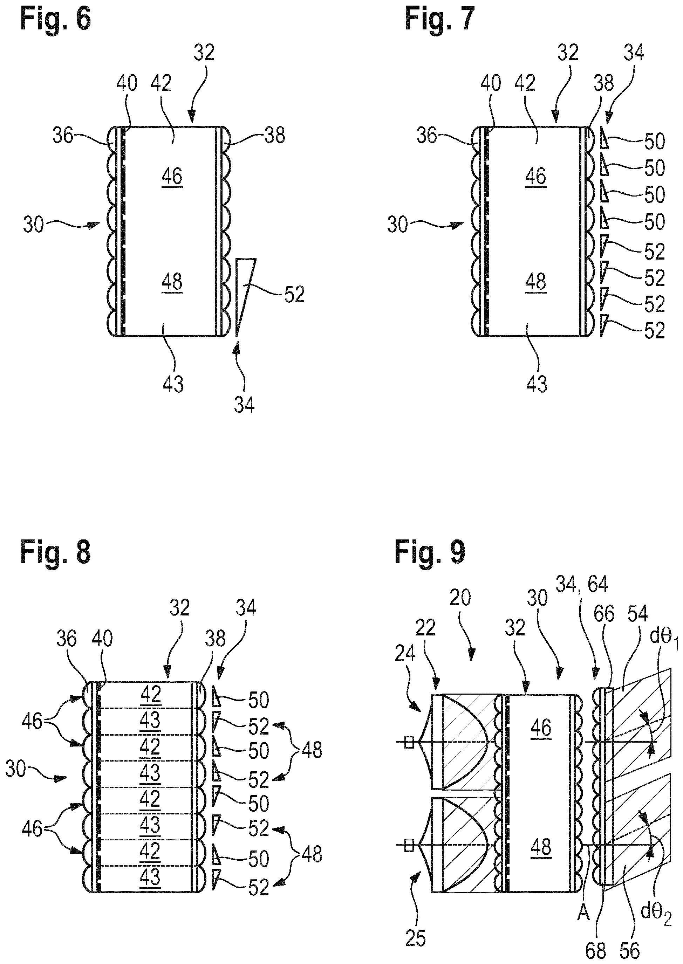

In Figur6 ist ein Projektionsmodul 30 eines Projektionssystems 20 gemäß einer fünften Ausführungsform gezeigt. Im Unterschied zum Projektionsmodul 30 der ersten Ausführungsform weist die optische Vorrichtung 34 kein erstes optisches Element 50, sondern nur ein zweites optisches Element 52 auf. Hierdurch wird das Licht, das durch den ersten Abschnitt 46 fällt, von der optischen Vorrichtung 34 um einen Winkel von 0° bzw. nicht abgelenkt, während das Licht, das durch den zweiten Abschnitt 48 fällt, von dem zweiten optischen Element 52 abgelenkt wird.

Das zweite optische Element 52 kann somit auch als erstes optisches Element angesehen werden.

In Figur 7 ist ein Projektionsmodul 30 eines Projektionssystems 20 gemäß einer sechsten Ausführungsform gezeigt. Im Unterschied zum Projektionsmodul 30 der ersten Ausführungsform weist die optische Vorrichtung 34 nicht ein einzelnes optisches Element 50, 52 für jeweils alle Kanäle 42, 43 eines Abschnitts 46, 48 auf, sondern hat jeweils ein entsprechendes einzelnes optisches Element 50, 52 für jeden Kanal 42, 43. Hierdurch ist die optische Vorrichtung 34 kompakter gestaltet, da die optischen Elemente 50, 52 kleiner ausgeführt sein können.

In Figur 8 ist ein Projektionsmodul 30 eines Projektionssystems 20 gemäß einer siebten Ausführungsform gezeigt, das wie das Projektionssystem 20 der sechsten Ausführungsform eine optische Vorrichtung 34 mit einzelnen, jeweils den Kanälen 42, 43 zugeordneten optischen Elementen 50, 52 aufweist. Im Unterschied zur sechsten Ausführungsform sind die Abschnitte 46, 48 nun nicht mehr strikt voneinander getrennt, sondern ihre Kanäle 46, 48 wechseln sich beispielsweise ab.

Die Gestaltung und Anordnung der optischen Elementen 50, 52 bestimmen in allen Ausführungsformen die durch sie gebildeten Lichtkegel 54, 56 und deren Winkelbereich 58, 60.

Eine weitere Möglichkeit, die Lichtkegel 54, 56 und deren Winkelbereich 58, 60 einzustellen, ist in Figur 9 dargestellt, die ein Projektionssystem 20 gemäß einer achten Ausführungsform zeigt. Im Unterschied zum Projektionsmodul 30 der zweiten Ausführungsform umfasst die optische Vorrichtung 34 ein Linsenarray 64 mit einem ersten Arrayabschnitt 66 und einem vom ersten verschiedenen zweiten Arrayabschnitt 68. Dabei wird das Licht des ersten Abschnitts 46 von dem ersten Arrayabschnitt 66 um einen ersten Winkel dθ₁ gegenüber der optischen Achse A abgelenkt, während das Licht des zweiten Abschnitts 48 vom zweiten Arrayabschnitt 68 um einen zweiten Winkel dθ₂ gegenüber der optischen Achse A abgelenkt wird.

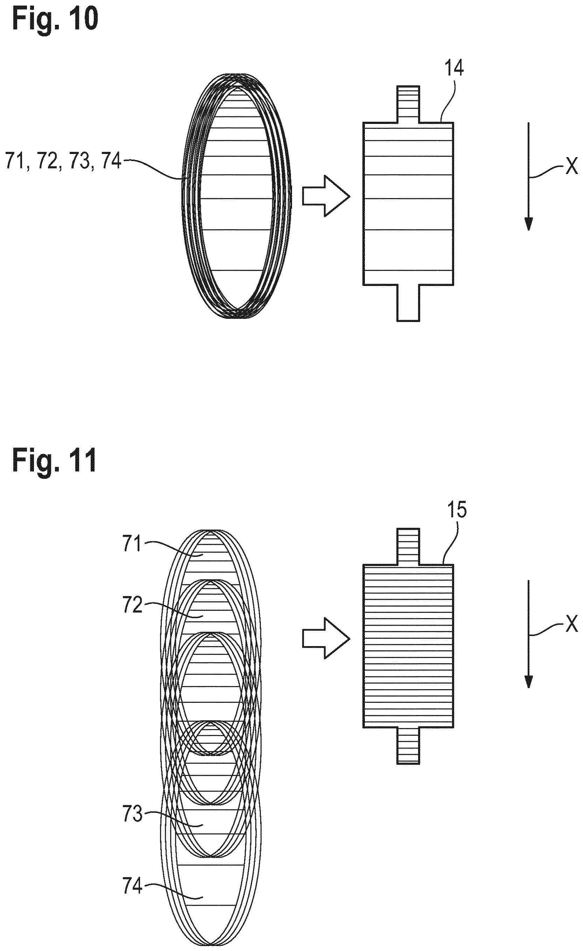

In Figur 10 ist eine Projektion 14 gezeigt, die von einem Projektionssystem 20 gemäß einer neunten Ausführungsform in einem ersten Zustand erzeugt wird. Im Unterschied zur ersten Ausführungsform weist das Projektionssystem 20 hierbei ein Projektionsmodul 30 auf, das dazu ausgebildet ist vier Lichtkegel 54, 56 mit jeweils einer Einzelprojektion 71, 72, 73, 74 zu erzeugen. Hierzu ist das Mikrolinsenarray 32 in vier Abschnitte 46, 48 unterteilt und die optische Vorrichtung 34 weist entsprechend vier optische Elemente 50, 52 auf, die jeweils einem der vier Abschnitte 46, 48 zugeordnet sind.

Die Projektion 14 wird durch Überlagerung der vier Einzelprojektionen 71, 72, 73, 74 gebildet, die jeweils das identische, vollständige Motiv aufweisen. Hierbei werden alle Einzelprojektionen 71, 72, 73, 74 auf dieselbe Fläche projiziert, so dass jede Einzelprojektion 71, 72, 73, 74 vollständig mit jeder anderen Einzelprojektion 71, 72, 73, 74 überlappt.

Aufgrund der zunehmenden Entfernung in X-Richtung vom Projektionssystem 20 weist die Projektion 14 eine in X-Richtung abnehmende Leuchtdichte auf.

Um eine Projektion 15 (siehe Figur 11) mit homogener Leuchtdichte zu erzeugen, ist ein Projektionssystem 20 gemäß einer zehnten Ausführungsform vorgesehen, das analog zur neunten Ausführungsform gestaltet ist.

Das Projektionssystem 20 hat dabei einen Zustand, in dem die Projektion 15 durch Überlagerung der vier Einzelprojektionen 71, 72, 73, 74 gebildet wird.

Im Unterschied zur Projektion 14 werden die Einzelprojektionen 71, 72, 73, 74 auf in X-Richtung zueinander versetzte Flächen projiziert, so dass die Einzelprojektionen 71, 72, 73, 74 in X-Richtung teilweise überlappen.

Jede Einzelprojektion 71, 72, 73, 74 weist dabei nur den entsprechenden Teil des Motivs auf, der auf der jeweiligen Fläche abgebildet ist, auf die der zugeordnete Lichtkegel 54, 56 die Einzelprojektion 71, 72, 73, 74 projiziert.

Somit wird das Licht der Einzelprojektion 71, 72, 73, 74 stufenweise über die gesamte Projektionsfläche verteilt, sodass die Leuchtdichte über die gesamte Fläche der Projektion 15 homogen ist.

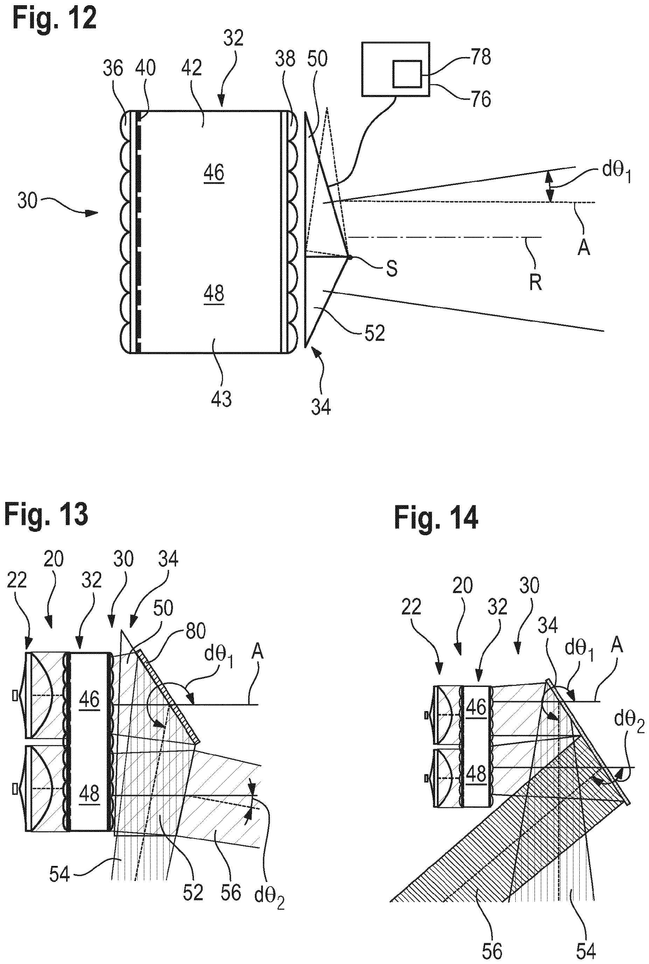

Eine Möglichkeit, die ein Projektionssystem 20 in unterschiedliche Zustände zu verstellen, ist in Figur 12 dargestellt, die ein Projektionsmodul 30 eines Projektionssystems 20 gemäß einer elften Ausführungsform zeigt. Im Unterschied zum Projektionsmodul 30 der ersten Ausführungsform hat die optische Vorrichtung 34 zwei optische Elemente 50, 52 in Form von zwei separaten, d.h. nicht direkt miteinander verbundenen, Prismen.

Die optischen Elemente 50, 52 können verschiedene Brechungsindizes haben und/oder aus unterschiedlichen Materialien hergestellt sein.

Ferner umfasst die optische Vorrichtung 34 eine Verstelleinrichtung 76 mit einem Antrieb 78.

Mittels der Verstelleinrichtung 76 ist das erste optische Element 50 zwischen einer ersten Stellung (in Figur 12 durchgezogen dargestellt) und einer zweiten Stellung (in Figur 12 strichliert dargestellt) um eine Schwenkachse S schwenkbar, die sich in Figur 12 senkrecht zur Zeichenebene erstreckt. In der ersten und zweiten Stellung wird dabei das Licht des ersten Abschnitts 46 jeweils um einen anderen ersten Winkel dθ₁ abgelenkt.

Auf diese Weise kann der Winkelbereich 58 des zugeordneten Lichtkegels 54 verstellt werden.

Selbstverständlich kann zusätzlich oder alternativ das zweite optische Element 52 mittels der Verstelleinrichtung 76 verstellbar sein.

Ferner kann die optische Vorrichtung 34 mittels des Antriebs 78 um eine Rotationsachse R gedreht werden, die parallel zur optischen Achse A verläuft.

Grundsätzlich können in einer weiteren Ausführungsform zusätzlich oder alternativ die optische Vorrichtung 34 oder einzelne optische Elemente 50, 52 der optischen Vorrichtung 34 mittels des Antriebs 78 um eine beliebige Rotationsachse R gedreht werden.

In Figur 13 ist ein Projektionssystem 20 gemäß einer zwölften Ausführungsform gezeigt. Im Unterschied zum Projektionsmodul 30 der zweiten Ausführungsform weist die optische Vorrichtung 34 eine reflektierende Fläche 80 auf, die das Licht des ersten Abschnitts 46 reflektiert, sodass der erste Winkel dθ₁ etwa 260° beträgt.

In Figur 14 ist ein Projektionssystem 20 gemäß einer dreizehnten Ausführungsform gezeigt. Im Unterschied zum Projektionsmodul 30 der zweiten Ausführungsform ist die optische Vorrichtung 34 ein Mikrospiegelarray (Digital Micromirror Device, auch mit DMD abgekürzt), mittel dem das Licht des ersten Abschnitts 46 und das Licht des zweiten Abschnitts 48 jeweils um einen anderen Winkel reflektiert wird.

Im dargestellten Ausführungsbeispiel beträgt der erste Winkel dθ₁ etwa 270°, während der zweite Winkel dθ₂ etwa -135° beträgt.

In allen Ausführungsformen ist auf diese Weise ein Projektionssystem 20 bereitgestellt, das kompakt gestaltet und flexibel einsetzbar ist.

Die Erfindung ist nicht auf die gezeigten Ausführungsformen beschränkt. Insbesondere können einzelne Merkmale einer Ausführungsform beliebig mit Merkmalen anderer Ausführungsformen kombiniert werden, insbesondere unabhängig von den anderen Merkmalen der entsprechenden Ausführungsformen.

## Patentansprüche

1. Projektionssystem für ein Fahrzeug (10), insbesondere für eine Umfeldbeleuchtungseinrichtung zur Erzeugung mehrerer Lichtkegel (54, 56) zur Beleuchtung des Bodens (16) in der Umgebung des Fahrzeugs (10), mit mindestens einer Lichtquelle (22) und einem Mikrolinsenarray (32), wobei das Mikrolinsenarray (2) ein Feldlinsenarray (36) mit mehreren Feldlinsen, ein Projektionslinsenarray (38) mit mehreren Projektionslinsen sowie eine zwischen dem Feldlinsenarray (36) und dem Projektionslinsenarray (38) angeordnete Maskenschicht (40) mit mehreren Maskenteilen umfasst,
wobei das Mikrolinsenarray (32) eine optische Achse (A), einen ersten Abschnitt (46) mit wenigstens einem ersten Kanal (42) und einen zweiten Abschnitt (48) mit wenigstens einem zweiten Kanal (43) aufweist,
**dadurch gekennzeichnet, dass**
das Projektionssystem (20) eine optische Vorrichtung (34) aufweist, die dem Mikrolinsenarray (32) nachgeordnet und wenigstens im Bereich des ersten Abschnitts (46) angeordnet ist, wobei der Abstand zwischen dem Mikrolinsenarray und der optischen Vorrichtung weniger als 20 mm beträgt, und
wobei von der Lichtquelle (22) emittiertes Licht, das durch den wenigstens einen ersten Kanal (42) des ersten Abschnitts (46) fällt, durch die optische Vorrichtung (34) um einen ersten Winkel (dθ₁) gegenüber der optischen Achse (A) abgelenkt ist und einen ersten Lichtkegel (54) bildet, und von der Lichtquelle (22) emittiertes Licht, das durch den wenigstens einen zweiten Kanal (43) des zweiten Abschnitts (48) fällt, um einen zweiten Winkel (dθ₂) gegenüber der optischen Achse (A) abgelenkt ist, der vom ersten Winkel (dθ₁) verschieden ist, und einen zweiten Lichtkegel (56) bildet.

2. Projektionssystem nach Anspruch 1, **dadurch gekennzeichnet, dass** der erste Winkel (dθ₁) mehr als 0°, insbesondere mindestens 10°, bevorzugt mindestens 15° beträgt, und/oder der zweite Winkel (dθ₂) weniger als 0°, insbesondere weniger als -10°, bevorzugt weniger als -15° beträgt.

3. Projektionssystem nach Anspruch 1 oder 2, **dadurch gekennzeichnet, dass** die Differenz zwischen dem ersten Winkel (dθ₁) und dem zweiten Winkel (dθ₂) mindestens 15°, insbesondere mindestens 25° beträgt.

4. Projektionssystem nach einem der vorhergehenden Ansprüche, **dadurch gekennzeichnet, dass** das Mikrolinsenarray (32) eine Maskenschicht (40) zur Erzeugung eines Motivs aufweist insbesondere wobei die Maskenschicht (40) im ersten Abschnitt (46) und im zweiten Abschnitt (48) zur Erzeugung unterschiedlicher Motive ausgebildet sind.

5. Projektionssystem nach einem der vorhergehenden Ansprüche, **dadurch gekennzeichnet, dass** das Mikrolinsenarray (32) zwischen dem ersten Abschnitt (46) und dem zweiten Abschnitt (48) einen lichtundurchlässigen Abschnitt (63) aufweist, insbesondere mit wenigstens einer geschlossenen Mikrolinse und/oder einem geschlossenen Kanal (42, 43).

6. Projektionssystem nach einem der vorhergehenden Ansprüche, **dadurch gekennzeichnet, dass** die Lichtquelle (22) eine Emissionseinheit (24) mit einem lichtemittierenden Element (26) und einem kollimierenden Element (28) aufweist, wobei das lichtemittierende Element (26) auf der optischen Achse (K) des kollimierenden Elements (28) oder senkrecht zur optischen Achse (K) des kollimierenden Elements (28) versetzt angeordnet ist.

7. Projektionssystem nach einem der vorhergehenden Ansprüche, **dadurch gekennzeichnet, dass** die Lichtquelle (22) eine erste Emissionseinheit (24) und eine zweite Emissionseinheit (25) aufweist, wobei dem ersten Abschnitt (46) die erste Emissionseinheit (24) und dem zweiten Abschnitt (48) die zweite Emissionseinheit (25) zugeordnet ist.

8. Projektionssystem nach einem der vorhergehenden Ansprüche, **dadurch gekennzeichnet, dass** die optische Vorrichtung (34) ein erstes optisches Element (50), das dem ersten Abschnitt (46) des Mikrolinsenarrays (32) zugeordnet ist, und ein zweites optisches Element (52) aufweist, das dem zweiten Abschnitt (48) des Mikrolinsenarrays (32) zugeordnet ist, insbesondere wobei das erste optische Element (50) und das zweite optische Element (52) verschiedene Brechungsindizes haben und/oder aus unterschiedlichen Materialien hergestellt sind.

9. Projektionssystem nach einem der vorhergehenden Ansprüche, **dadurch gekennzeichnet, dass** die optische Vorrichtung (34) ein oder mehrere optische Elemente (50, 52) aus folgender Gruppe umfasst: ein Prisma, insbesondere ein spritzgegossenes Prisma, eine Linse, ein Linsenarray (64), eine Freiformoptik, ein Mikrospiegelarray und/oder eine Flüssigkristallmatrix.

10. Projektionssystem nach Anspruch 8 oder 9, **dadurch gekennzeichnet, dass** das Projektionssystem (20) eine Verstelleinrichtung (76) für die optische Vorrichtung (34) aufweist, mittels der zumindest ein optisches Element (50, 52) der optischen Vorrichtung (34) zwischen unterschiedlichen Stellungen verstellbar ist.

11. Projektionssystem nach Anspruch 10, **dadurch gekennzeichnet, dass** die Verstelleinrichtung (76) einen Antrieb (78) aufweist, der dazu ausgebildet ist, das zumindest eine optische Element (50, 52) der optischen Vorrichtung (34) um eine Rotationsachse (R) zu rotieren und/oder um eine Schwenkachse (S) zu schwenken.

12. Projektionssystem nach einem der vorhergehenden Ansprüche, **dadurch gekennzeichnet, dass** der Abstand (L) zwischen der optischen Vorrichtung (34) und dem Mikrolinsenarray (32) weniger als 10 mm, insbesondere weniger als 5 mm beträgt.

13. Projektionssystem nach einem der vorhergehenden Ansprüche, **dadurch gekennzeichnet, dass** das Projektionssystem (20) einen Zustand aufweist, in der der erste Lichtkegel (54) und der zweite Lichtkegel (56) nicht miteinander, teilweise miteinander oder vollständig miteinander überlappen.

14. Projektionssystem nach einem der vorhergehenden Ansprüche, **dadurch gekennzeichnet, dass** das Projektionssystem (20) einen Zustand aufweist, in der der erste Lichtkegel (54) und der zweite Lichtkegel (56) teilweise derart überlappen, dass die Leuchtdichte in einer Ebene, insbesondere einer Ebene parallel zum Boden (16), homogen ist.

15. Projektionssystem nach einem der vorhergehenden Ansprüche, **dadurch gekennzeichnet, dass** die optische Vorrichtung (34) eine reflektierende Fläche (80) aufweist, die Licht reflektiert, das durch den wenigstens einen ersten Kanal (42) des ersten Abschnitts (46) und/oder durch den wenigstens einen zweiten Kanal (43) des zweiten Abschnitts (48) fällt.

16. Fahrzeug mit einem Projektionssystem (20) nach einem der vorhergehenden Ansprüche.

## Claims

1. A projection system for a vehicle (10), in particular for an ambient lighting device for generating a plurality of light cones (54, 56) for illuminating the ground (16) in the surroundings of the vehicle (10), comprising at least one light source (22) and a microlens array (32), the microlens array (32) comprising a field lens array (36) having a plurality of field lenses, a projection lens array (38) having a plurality of projection lenses, and a mask layer (40) which is arranged between the field lens array (36) and the projection lens array (38) and has a plurality of mask parts,
wherein the microlens array (32) includes an optical axis (A), a first portion (46) with at least one first channel (42) and a second portion (48) with at least one second channel (43),
**characterized in that** the projection system (20) includes an optical device (34) that is provided downstream of the microlens array (32) and is arranged at least in the area of the first portion (46), with the distance between the microlens array and the optical device being less than 20 mm, and
wherein light emitted by the light source (22) which falls through the at least one first channel (42) of the first portion (46) is deflected by the optical device (34) by a first angle (dθ₁) with respect to the optical axis (A) and forms a first light cone (54), and light emitted by the light source (22) which falls through the at least one second channel (43) of the second portion (48) is deflected by a second angle (dθ₂) with respect to the optical axis (A), which differs from the first angle (dθ₁), and forms a second light cone (56).

2. The projection system according to claim 1, **characterized in that** the first angle (dθ₁) is more than 0°, in particular at least 10°, preferably at least 15°, and/or the second angle (dθ₂) is less than 0°, in particular less than -10°, preferably less than -15°.

3. The projection system according to claim 1 or 2, **characterized in that** the difference between the first angle (dθ₁) and the second angle (dθ₂) is at least 15°, in particular at least 25°.

4. The projection system according to any of the preceding claims, **characterized in that** the microlens array (32) has a mask layer (40) for generating a motif, in particular wherein the mask layers (40) in the first portion (46) and in the second portion (48) are configured to generate different motifs.

5. The projection system according to any of the preceding claims, **characterized in that** the microlens array (32) has an opaque portion (63) between the first portion (46) and the second portion (48), in particular with at least one closed microlens and/or a closed channel (42, 43).

6. The projection system according to any of the preceding claims, **characterized in that** the light source (22) includes an emission unit (24) with a light-emitting element (26) and a collimating element (28), wherein the light-emitting element (26) is arranged on the optical axis (K) of the collimating element (28) or offset perpendicularly to the optical axis (K) of the collimating element (28).

7. The projection system according to any of the preceding claims, **characterized in that** the light source (22) includes a first emission unit (24) and a second emission unit (25), wherein the first emission unit (24) is associated with the first portion (46) and the second emission unit (25) is associated with the second portion (48).

8. The projection system according to any of the preceding claims, **characterized in that** the optical device (34) includes a first optical element (50) that is associated with the first portion (46) of the microlens array (32) and a second optical element (52) that is associated with the second portion (48) of the microlens array (32), in particular wherein the first optical element (50) and the second optical element (52) have different refractive indices and/or are made of different materials.

9. The projection system according to any of the preceding claims, **characterized in that** the optical device (34) comprises one or more optical elements (50, 52) from the following group: a prism, in particular an injection molded prism, a lens, a lens array (64), a freeform optics, a micromirror array and/or a liquid crystal matrix.

10. The projection system according to claim 8 or 9, **characterized in that** the projection system (20) includes an adjusting device (76) for the optical device (34), by means of which at least one optical element (50, 52) of the optical device (34) is adjustable between different positions.

11. The projection system according to claim 10, **characterized in that** the adjusting device (76) includes a drive (78) that is configured to rotate the at least one optical element (50, 52) of the optical device (34) about an axis of rotation (R) and/or to swivel the same about a swivel axis (S).

12. The projection system according to any of the preceding claims, **characterized in that** the distance (L) between the optical device (34) and the microlens array (32) is less than 10 mm, in particular less than 5 mm.

13. The projection system according to any of the preceding claims, **characterized in that** the projection system (20) has a state in which the first light cone (54) and the second light cone (56) do not overlap with each other, partly overlap with each other or completely overlap with each other.

14. The projection system according to any of the preceding claims, **characterized in that** the projection system (20) has a state in which the first light cone (54) and the second light cone (56) partly overlap such that the luminous density in a plane, in particular a plane parallel to the ground (16), is homogeneous.

15. The projection system according to any of the preceding claims, **characterized in that** the optical device (34) has a reflecting surface (80) which reflects light that falls through the at least one first channel (42) of the first portion (46) and/or through the at least one second channel (43) of the second portion (48).

16. A vehicle comprising a projection system (20) according to any of the preceding claims.

## Revendications

1. Système de projection pour un véhicule (10), en particulier pour un moyen d'éclairage ambiant pour la génération d'une pluralité de cônes lumineux (54, 56) pour l'éclairage du sol (16) aux alentours du véhicule (10), comprenant au moins une source lumineuse (22) et un réseau de microlentilles (32), le réseau de microlentilles (2) comportant un réseau de lentilles de champ (36) qui comprend une pluralité de lentilles de champ, un réseau de lentilles de projection (38) qui comprend une pluralité de lentilles de projection, et une couche de masquage (40) qui est agencée entre le réseau de lentilles de champ (36) et le réseau de lentilles de projection (38) et comprend une pluralité de parties de masquage,
le réseau de microlentilles (32) présentant un axe optique (A), un premier tronçon (46) qui comprend au moins un premier canal (42), et un deuxième tronçon (48) qui comprend au moins un deuxième canal (43),
**caractérisé en ce que** le système de projection (20) présente un dispositif optique (34) qui est agencé en aval du réseau de microlentilles (32) et est agencé au moins dans la zone du premier tronçon (46), la distance entre le réseau de microlentilles et le dispositif optique étant inférieure à 20 mm, et
de la lumière qui est émise par la source lumineuse (22) et qui tombe à travers ledit au moins un premier canal (42) du premier tronçon (46) étant déviée par le dispositif optique (34) selon un premier angle (dθ₁) par rapport à l'axe optique (A) et formant un premier cône lumineux (54), et de la lumière qui est émise par la source lumineuse (22) et qui tombe à travers ledit au moins un deuxième canal (43) du deuxième tronçon (48) étant déviée selon un deuxième angle (dθ₂) différent du premier angle (dθ₁) par rapport à l'axe optique (A) et formant un deuxième cône lumineux (56).

2. Système de projection selon la revendication 1, **caractérisé en ce que** le premier angle (dθ₁) est supérieur à 0°, en particulier égal à au moins 10°, de préférence égal à au moins 15°, et/ou **en ce que** le deuxième angle (dθ₂) est inférieur à 0°, en particulier inférieur à -10°, de préférence inférieur à -15°.

3. Système de projection selon la revendication 1 ou 2, **caractérisé en ce que** la différence entre le premier angle (dθ₁) et le deuxième angle (dθ₂) est égale à au moins 15°, en particulier à au moins 25°.

4. Système de projection selon l'une des revendications précédentes, **caractérisé en ce que** le réseau de microlentilles (32) présente une couche de masquage (40) pour la génération d'un motif, la couche de masquage (40) étant en particulier réalisée dans le premier tronçon (46) et dans le deuxième tronçon (48) pour produire différents motifs.

5. Système de projection selon l'une des revendications précédentes, **caractérisé en ce que** le réseau de microlentilles (32) présente entre le premier tronçon (46) et le deuxième tronçon (48) un tronçon opaque (63) qui comprend en particulier au moins une microlentille fermée et/ou un canal fermé (42, 43).

6. Système de projection selon l'une des revendications précédentes, **caractérisé en ce que** la source lumineuse (22) présente une unité d'émission (24) qui comprend un élément d'émission de lumière (26) et un élément collimateur (28), l'élément d'émission de lumière (26) étant agencé sur l'axe optique (K) de l'élément collimateur (28) ou étant décalé perpendiculairement par rapport à l'axe optique (K) de l'élément collimateur (28).

7. Système de projection selon l'une des revendications précédentes, **caractérisé en ce que** la source lumineuse (22) présente une première unité d'émission (24) et une deuxième unité d'émission (25), la première unité d'émission (24) étant associée au premier tronçon (46), et la deuxième unité d'émission (25) au deuxième tronçon (48).

8. Système de projection selon l'une des revendications précédentes, **caractérisé en ce que** le dispositif optique (34) présente un premier élément optique (50) qui est associé au premier tronçon (46) du réseau de microlentilles (32), et un deuxième élément optique (52) qui est associé au deuxième tronçon (48) du réseau de microlentilles (32), le premier élément optique (50) et le deuxième élément optique (52) présentant en particulier différents indices de réfraction et/ou étant réalisés en matériaux différents.

9. Système de projection selon l'une des revendications précédentes, **caractérisé en ce que** le dispositif optique (34) comprend un ou plusieurs éléments optiques (50, 52) du groupe suivant : un prisme, en particulier un prisme moulé par injection, une lentille, un réseau de lentilles (64), une optique de formage libre, un réseau de micro-miroirs et/ou une matrice à cristaux liquides.

10. Système de projection selon la revendication 8 ou 9, **caractérisé en ce que** le système de projection (20) présente un moyen d'ajustage (76) pour le dispositif optique (34), au moyen duquel au moins un élément optique (50, 52) du dispositif optique (34) peut être ajusté entre deux positions différentes.

11. Système de projection selon la revendication 10, **caractérisé en ce que** le moyen d'ajustage (76) présente un entraînement (78) qui est réalisé de manière à entraîner ledit au moins un élément optique (50, 52) du dispositif optique (34) en rotation autour d'un axe de rotation (R) et/ou à le faire pivoter autour d'un axe de pivotement (S).

12. Système de projection selon l'une des revendications précédentes, **caractérisé en ce que** la distance (L) entre le dispositif optique (34) et le réseau de microlentilles (32) est inférieure à 10 mm, en particulier inférieure à 5 mm.

13. Système de projection selon l'une des revendications précédentes, **caractérisé en ce que** le système de projection (20) a un état dans lequel le premier cône lumineux (54) et le deuxième cône lumineux (56) ne se chevauchent pas, se chevauchent en partie ou se chevauchent entièrement.

14. Système de projection selon l'une des revendications précédentes, **caractérisé en ce que** le système de projection (20) a un état dans lequel le premier cône lumineux (54) et le deuxième cône lumineux (56) se chevauchent partiellement de telle sorte que la luminance est homogène dans un plan, en particulier un plan parallèle au fond (16).

15. Système de projection selon l'une des revendications précédentes, **caractérisé en ce que** le dispositif optique (34) présente une face réfléchissante (80) qui réfléchit de la lumière qui tombe à travers ledit au moins un premier canal (42) du premier tronçon (46) et/ou à travers ledit au moins un deuxième canal (43) du deuxième tronçon (48).

16. Véhicule comprenant un système de projection (20) selon l'une des revendications précédentes.
